# EUROPÄISCHE PATENTSCHRIFT

(11) **EP 1 372 403 B1**
(45) Veröffentlichungstag und Bekanntmachung des Hinweises auf die Patenterteilung: **15.02.2006**
(21) Anmeldenummer: 02716845.9
(22) Anmeldetag: 27.03.2002
(51) Int. Cl.: A22B 5/00

(54) **VORRICHTUNG ZUM ABTRENNEN EINES RIPPENSTÜCKES**
DEVICE FOR SEVERING A SPARE RIB
DISPOSITIF POUR SEPARER UNE COTE DECOUVERTE

(30) Priorität: 30.03.2001 DE 10116009
(43) Veröffentlichungstag der Anmeldung: 02.01.2004
(73) Patentinhaber: FREUND Maschinenfabrik GmbH & Co. KG, 33100 Paderborn (DE)
(72) Erfinder: FREUND, Robert, 33178 Borchen (DE); FREUND, Reinhard, 33100 Paderborn (DE); HAHN, Hermann, 33104 Paderborn (DE); ZELICHOWSKI, Maciej, 33378 Rheda-Wiedenbrück (DE); SYRE, Manfred, 33100 Paderborn (DE)
(74) Vertreter: Hanewinkel, Lorenz
(86) Internationale Anmeldenummer: PCT/EP2002/003470
(87) Internationale Veröffentlichungsnummer: WO 2002/078452

(56) Entgegenhaltungen:
- US-A- 5 037 349
- US-A- 5 725 424

## Beschreibung

Die Erfindung betrifft eine Vorrichtung zum Trennen eines Rippenstückes von einem Rückgrat, wobei das gespaltene Rückgrat in einer Führungsbahn aus zwei Führungsplatten, die eine keilförmige Rinne begrenzt, gefördert wird, durch die das Rippenstück jeweils hindurchragt und ein Trennwerkzeug rippenseitig vorbeilaufend kreuzt.

Aus der CA 2,010,034 ist eine derartige Trennvorrichtung bekannt, bei der eine Bandsäge den Förderweg des Rippenstückes kreuzt. Die Bandsäge erbringt bekanntlich einen breiten Schnitt von ca. 0,8 mm und demgemäß einen hohen Verlust am kostbaren Rippenstück. Das Verschnittmaterial muß den Vorschriften gemäß aufwendig entsorgt werden. Auch läßt sich bei der vorbekannten Vorrichtung der Abstand der beiden steilkantigen Führungsauflagen, die sich einlaufseitig der Säge befinden, nicht variieren. In denen ist das Rückgrat mit den Rippen so gelagert, daß die Rippen sich dazwischen und das Rückgrat sich darüber befindet und dadurch die Schnittebene der Säge zu diesem festgelegt ist. Dadurch ist der Schnitt bei einem dickeren Rückgrat unnötig weit zu diesem beabstandet, und ein erheblicher Rippenstückverlust entsteht dadurch. Die Bandsäge hat den weiteren Nachteil, daß sie mehrere bewegte Teile aufweist, die auch eine aufwendige Reinigung und Wartung erfordern. Aus US-A-5 037 349 geht eine Vorrichtung gemäß Oberbegriff des Anspruchs 1 hervor.

Es ist Aufgabe der Erfindung, eine Trennvorrichtung für Rippenstücke zu schaffen, die die vorstehenden Nachteile nicht aufweist und bei einfacher Bauart und sicherer Bedienung einen minimalen Verschnitt und Verlust aufweist.

Die Lösung besteht darin, daß das Trennwerkzeug ein kreisförmiges Blatt mit einem keilförmig zugespitzten Schneid- oder Zahnrand ist, das nahe parallel zu den Führungsplatten angeordnet ist, deren Abstand zueinander einstellbar ist.

Vorteilhafte Ausgetaltungen sind in den Unteransprüchen angegeben.

Das keilförmig zugerichtete Blatt arbeitet im Vergleich zu einer Bandsäge als ein rotierendes Messer, das die getrennten Bereiche auseinanderdrückt, ohne wie eine Säge viel Material aus dem Schnitt herauszutragen. Die Schnittverluste sind somit ganz minimal, wenn randseitig eine schmale Zahnung angebracht ist, und praktisch Null, wenn eine glatte oder leicht gewellte Schneidkante ausgebildet ist.

Die Verstellbarkeit der Weite der Führungsrinne durch die Verstellbarkeit der einen Führungsplatte zur anderen erbringt eine jeweils passend zu dessen Dicke optimale Lage des Rückgrates in der Rinne. Somit wird der Schnitt jeweils dicht an die Wirbel gelegt, wobei jeweils ein Anschnitt der Seitenfortsätze, die sich neben den Rippen aus den Wirbeln erstrecken, eben verhindert wird, aber kein Rippenstückverlust auftritt.

Die exakte Tiefenlage des Rückgrates in der Führungsrinne wird durch einen elastisch andrückenden Fördertrieb gesichert, der aus mehreren Andruckrädern besteht, die synchron, ggf. kuppelbar, angetrieben sind und in Richtung auf die Spaltfläche des Rückgrates elastisch gehalten sind. Die Andruckräder, vorzugsweise sind es drei, sind so entlang der Rinne positioniert, daß mindestens eines das Rückgrat jeweils vor dem Eintritt der Rippen in die Schneidposition erfaßt und mindestens eines das Rückgrat nach dem Verlassen des Schneidbereichs erfaßt.

Die Förderbahn mit ihren Führungsplatten beginnt vor den Förderrädern mit einem abgedeckten Sicherheitsbereich und davor mit einem Einlegebereich wo das Rückgrat, mit den anhängenden Rippen in die Rinne gesteckt, eingelegt wird.

Für die Einfachheit des Einlegens sind die Führungs- bzw. Auflageplatten waagerecht gelegt und das Kreistrennblatt darunter horizontal angeordnet.

In einer vorteilhaften Ausführung greift die Trennscheibe randseitig in eine Nut der Führungsplatte ein, so daß die Trennschneide mit dem eng benachbarten Nutschenkel eine Scherfunktion ausführt. Die Umfangsgeschwindigkeit der Schneide ist nur etwa 5-fach höher als die Fördergeschwindigkeit, also wesentlich niedriger als die einer Säge.

An einem Rückgrat befinden sich, nachdem das Filetstück herausgetrennt ist, die gebogenen echten Rippen, von denen jeweils 100 bis 150 mm für die Bildung des Rippenstückes (spareribs) an dem Rückgrat zum Abtrennen belassen sind, und daran anschließend ein Bereich mit unechten Rippen, die kürzer und praktisch nicht gekrümmt sind. Zwischen den einzelnen echten und den unechten Rippen erstreckt sich das wertvolle Restfleisch, das durch den Trennschnitt nutzbar gemacht werden soll. Vorzugsweise wird das Restfleisch im Übergangsbereich zwischen den Rippenarten eingeschnitten und dann das Rückgrat in die Trennvorrichtung aufgegeben. Die unterschiedliche Länge der gebogenen und der geraden Rippen wird vorteilhaft genutzt, um die beiden Rippenstücke nach dem Trennen zu separieren, indem in der Höhe passend eine Trennwand in den Fallbereich der Rippenstücke angeordnet ist. Diese so gebildete Weiche leitet die gebogenen breiten Rippenstücke und die schmalen kürzeren Nebenstücke in verschiedene Auffangbehälter.

In einer vorteilhaften Weiterbildung ist statt einer Rutsche ein Förderband mit einem Antrieb im Endbereich hinter der Trennvorrichtung angeordnet, der die Rippenstücke auf einen Arbeitstisch weiterleitet. Der Bandförderer und dessen Schutzabdeckung sind vorteilhaft höhenverschwenkbar am Gestell der Trennvorrichtung leicht lösbar angebracht, so daß eine mühelose Reinigung möglich ist.

In einer weiteren vorteilhaften Ausgestaltung ist im vorderen Zuführbereich eine Trennschere zum Abschneiden des relativ kleinen Lappens mit den unechten Rippen angeordnet, so daß mit der Trennscheibe nur noch die echten Rippen abgetrennt werden. Dadurch entfällt im hinteren Förderbereich die Separation. Die Trennschere ist mit optischen Sensoren gesteuert, die auf den Übergang zwischen den kurzen und langen Rippen eingerichtet sind.

Vorteilhafte Ausgestaltungen sind in den Figuren 1 - 8 gezeigt.
- Fig. 1: zeigt eine Stirnansicht der Vorrichtung mit transparenter Verkleidung;
- Fig. 2: zeigt eine Seitenansicht transparent;
- Fig. 3: zeigt eine Aufsicht bei abgenommener Vortriebsbaugruppe;
- Fig. 4: zeigt eine Stirnansicht mit hochgeschwenkter Vortriebsbaugruppe;
- Fig. 5: zeigt ein Detail zu Fig. 1,
- Fig. 6: zeigt einen Förderbandanbau bei abgenommener in Aufsicht,
- Fig. 7: zeigt das Förderband in Seitenansicht,
- Fig. 8: zeigt die Seitenansicht bei hochgeschwenkten Verkleidungen und Förderband.

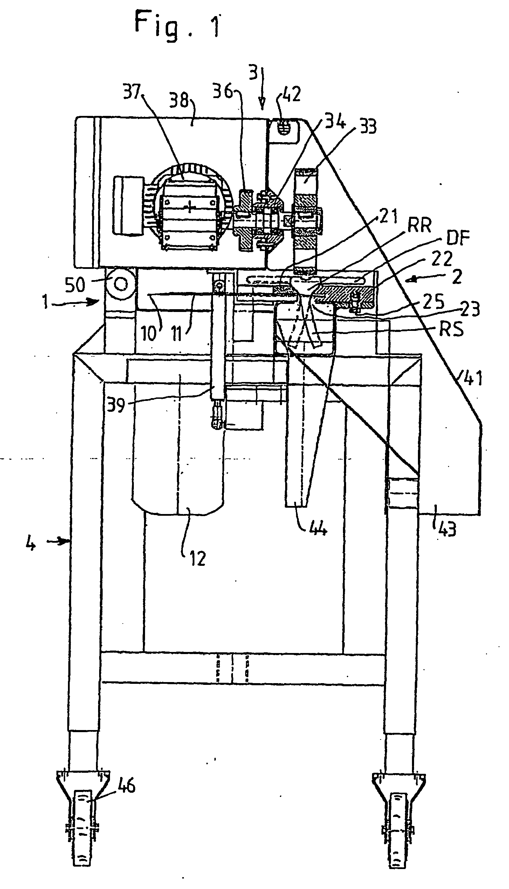

Fig. 1 zeigt die Vorrichtung, die auf einem Gestell 4 mit Rädern 46 montiert ist mit transparent dargestellten Abdeckungen 38, 41. In dem Gestell 4 ist eine Kreistrennvorrichtung 1 mit vertikaler Drehachse montiert. Der Getriebemotor 12 trägt auf seiner Antriebsachse das Kreistrennblatt 11, das an seinem verjüngt auslaufenden Randbereich einen Zahnkranz 10 oder bevorzugt einen zahnlosen Scherrand trägt.

Das Trennblatt 11 erstreckt sich unter eine Führungsbahn 2, die als Führungsrinne 23 zwischen zwei Führungsplatten 21, 22 ausgebildet ist und nach unten verengt ausgebildet ist. Diese Ausgestaltung ermöglicht es, das gespaltene Rückgrat RR längs mit den Dornfortsätzen DF zur Seite gerichtet einzulegen und das Rippenstück RS nach unten hervorstehen zu lassen, so daß das Trennblatt 11 die Rippen dicht unter den Wirbeln abtrennt.

Die außenseitig gelegene Führungsplatte 22 weist in Längsrichtung eine Trennkxanzaufnahmenut 24 auf. Die Führungsplatte 22 ist in Querführungen 26 verschieblich und mit Feststellern 25 in dem Gestell 4 festlegbar, wodurch die Spaltweite der Führungsrinne 23 jeweils an die Wirbelgröße der zu verarbeitenden Tierkörper leicht anpaßbar ist.

Unter der Führungsbahn 2 sind Abführtrichter 43, 44 angeordnet, durch die das breitere Rippenstück RS und das schmalere Nebenstück, das die kürzeren unechten Rippen enthält, getrennt abgeführt werden.

Über der Führungsbahn 2 ist ein Förderantrieb 3 angeordnet. Er greift mit einer Reihe von Förderrädern 33 auf die gespaltene Seite der Wirbelsäule zu und fördert diese in die Trennstation und aus dieser heraus. Die Förderräder 33 sind mit elastischen Stegen versehen und/oder sie sind in Pendellagern 34 oder mit einer flexiblen Kupplung gegeneinander beschränkt beweglich gelagert und über Zahnräder 36 synchronisiert von dem Fördermotor 37 angetrieben.

Die Antriebsbaugruppe des Förderers 3 ist in einem Schwenklager 50 verschwenkbar auf dem Gestell 4 gelagert und mit dem Vortriebsgehäuse 38 verkleidet. Die Vortriebsräder und der Trennbereich sind mit einer Schutzhaube 41 verkleidet, die mit einer Einhängung 42 lösbar und schwenkbar am Vortriebsgehäuse 38 angeordnet ist.

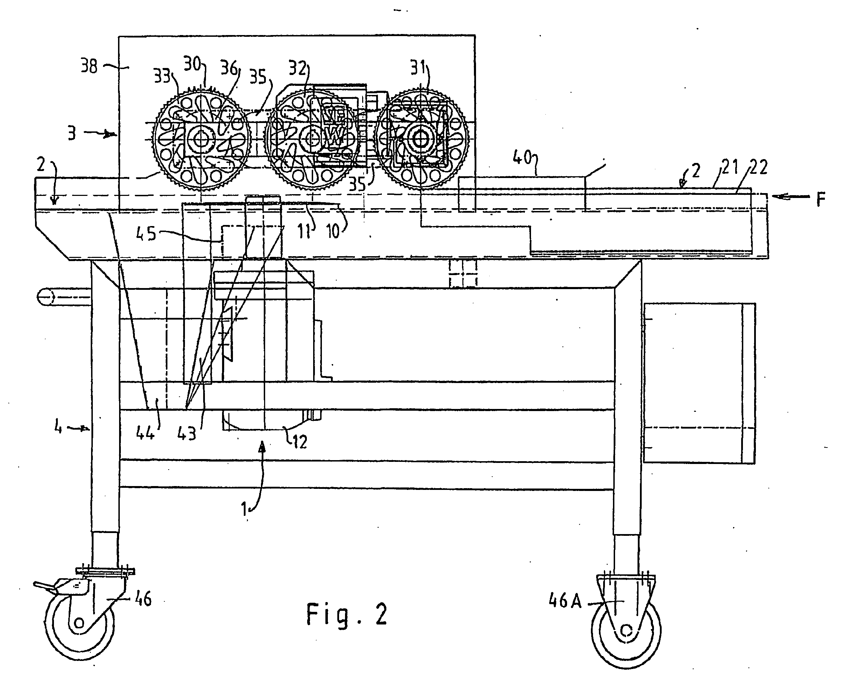

Fig. 2 zeigt eine Seitenansicht mit transparent gezeichneter Verkleidung 38. Das Gestell 4 hat zwei längsorientierte Rollen 46A und zwei schwenbkare, feststellbare Rollen, so daß es leicht transportabel und bei Gebrauch sicher im Stand ist. Die Führungsbahn 2 befindet sich in günstiger Arbeitshöhe. Die Führungsbahn 2 ist rechts im Bild nach oben offen, wo die zu bearbeitenden Stücke aufgegeben werden. Daran schließt sich in der Förderrichtung F ein Förderbereich mit einer Sicherheitsabdeckung 40 an, an den der Förderantrieb 3 anschließt, der mit dem Vortriebgehäuse 38 und der nicht gezeigten Schutzhaube abgedeckt ist. Auch ausgangsseitig von dieser ist eine Schutzabdeckung vorgesehen.

Im Förderbereich sind in Höhe der anzutreibenden Wirbel, diese mit einer Andruckkraft beaufschlagend, in der Förderrichtung F hintereinander Förderräder 31 - 33, beispielhaft drei, die jeweils mit umfangsmäßig verteilten Antriebsnocken 30 besetzt sind, angeordnet. Hinter der transparent gezeichneten Seite des Förderantriebes 3 sind koaxial zu den Förderrädern 31 - 33 Zahnräder 36 angeordnet, zwischen denen sich Zwischenräder 35 befinden, die die Antriebskraft zwischen den Rädern 36 verteilen und diese synchronisieren.

Der Schneidbereich des Trennkranzes 10 des Trennblattes 11 befindet sich über dem Getriebemotor 12 der Trennvorrichtung 1 in der Förderrichtung F zwischen dem zweiten und dem dritten Förderrad 32, 33, so daß ein sicheres zu- und Abführen zum Trennbereich erfolgt. Der Zahnkranz 10 hat vorzugsweise eine etwas höhere Geschwindigkeit in der Vorschubrichtung als die Förderräder 31 - 33 an ihrem Umfang, so daß der Schnitt ziehend erfolgt.

Das abgetrennte Rippenstück wird von dem Abweiser 45 in einen Trichter 43 geleitet und das schmalere Nebenstück wird über den Abweiser 45 in den Abführtrichter 44 geleitet. Das übrige Rückgrat verläßt die Vorrichtung am Ende der Führungsbahn.

In einer weiteren, nicht gezeigten Ausbildung der Vorrichtung ist der Abweiser 45 elektromagnetisch höhenverstellbar. Eine Lichtschranke oder ein Abtaster im Bereich des Vortriebs vor der Säge 1 steuert den Magneten.

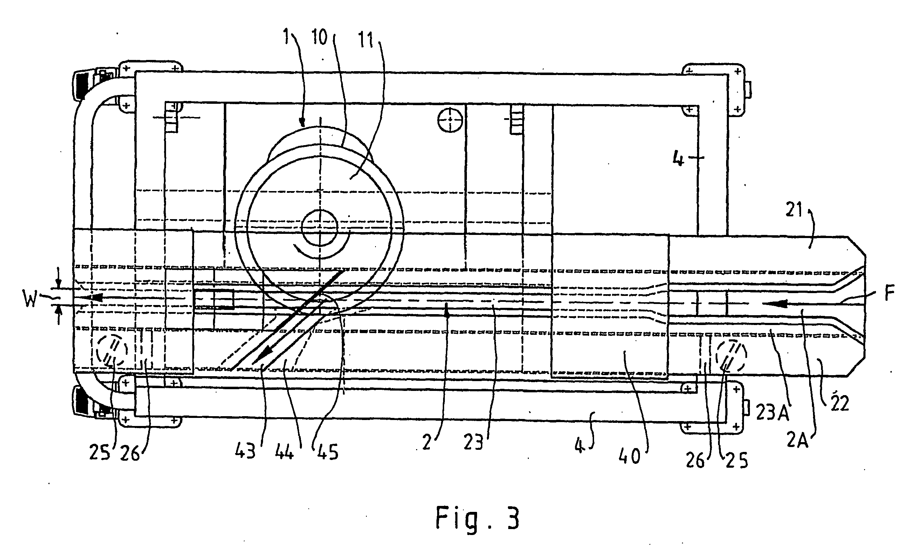

Fig. 3 zeigt eine Aufsicht der Vorrichtung bei entfernter Fördervorrichtung. Die Führungsbahn 2, 2A ist eingangsseitig trichterförmig und im Einlaufbereich 23A für ein leichteres Einlegen der Rippenstücke etwas weiter als im Förder- und Trennbereich ausgebildet.

Die beiden Führungsplatten 21, 22 weisen, nach oben die Führungsrinne 23 erweiternd, abgeschrägte Kanten auf. Die außenliegende zweite Führungsplatte 22 ist gestellseitig in parallelen Querführungen 26 am Gestell 4 gelagert und mit leicht bedienbaren Feststellern 25, jeweils wenn die Spaltweite W der Führungsrinne 23 auf ein gewünschtes Maß eingestellt ist, festzulegen.

Neben dem Trennbereich sind die Trichter 43, 44 im Bild zu sehen, die zu der Förderrichtung F im stumpfen Winkel schräggestellt abzweigen.

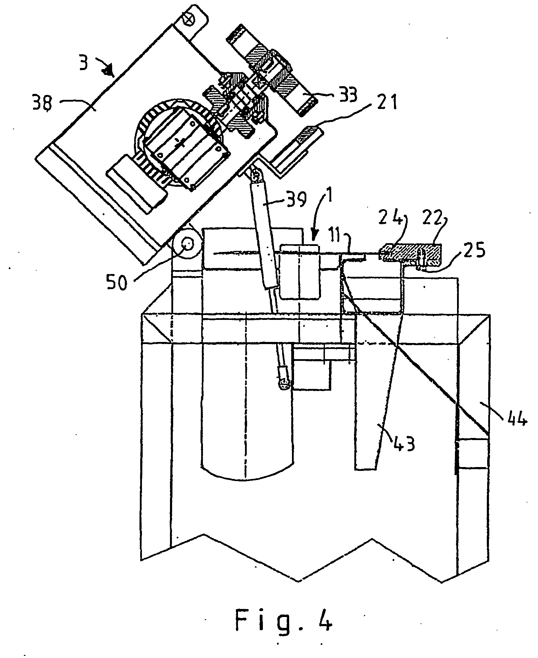

Fig. 4 zeigt einen Ausschnitt zu Fig. 1 im Zustand der Reinigung oder Wartung der Vorrichtung. Die Schutzhaube und die Sicherheitsabdeckung sind ganz abgenommen, und der Förderantrieb 3 ist um die Schwenklager 50 um ca. 45° hochgeschwenkt. Eine Gasfeder 39 stützt diese dabei ab. Mit dem Förderantrieb 3 ist auch die erste innere Führungsplatte 21 im Förderbereich hochgeschwenkt. Die zweite Führungsplatte 22 kann nach Lösen der Feststeller 25 vorgezogen und/oder abgenommen werden, so daß die Nut 24, die den Trennkranz 10 des Trennblattes 11 neben dem Trennbereich aufnimmt, einfach gereinigt werden kann und das Trennblatt 11 abgenommen und evtl. gewechselt werden kann.

Die gesamte Vorrichtung besteht, soweit sie Nahrungs- und Reinigungsmitteln exponiert ist, aus Edelstahl oder Kunststoff, der für den Nahrungsmittelsektor zugelassen ist.

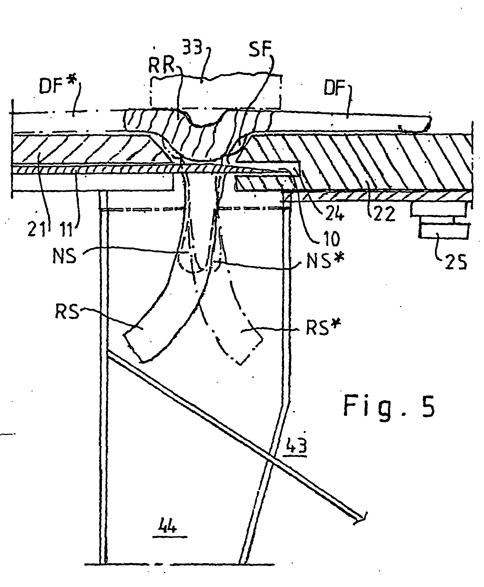

Fig. 5 zeigt eine Vergrößerung des Trennbereiches zu Fig. 1. Die Führungsbahn ist als eine nach unten verjüngte keilförmige Rille 23 zwischen den Führungsplatten 21, 22 ausgebildet. Darunter dreht sich horizontal das Trennblatt 11 mit dem randseitig verjüngten Schneidkranz 10, der eine spaltende Schneidwirkung entfaltet. Der verjüngte Trennblattbereich erstreckt sich über die Rille 23 der Führungsbahn hinaus bis in eine Aufnahmenut 24 der äußeren zweiten Führungsplatte 22, die am Gestell 4 mit dem Feststeller 25 lösbar festgelegt ist.

Das Rückgrat RR liegt mit seiner gespaltenen Seite nach oben und mit dem halben Dornfortsatz DF, DF* auf einer der Führungsplatten 22, 21 auf. Die Teile der jeweils rechten Körperhälfte sind mit einem Stern am Bezugszeichen gekennzeichnet und gestrichelt dargestellt. Das begehrte Rippenstück (sparerib) RS, RS* ragt ca. 10 cm durch die Führungsrille. Der Trennschnitt verläuft unmittelbar unter den kleinen Seitenfortsätzen SF der Wirbel, wenn die Weite der Führungsrille passend zu der Wirbelgröße der Tierart eingestellt ist. Auch die schmaleren Nebenstücke NS, NS*, die die unechten kurzen Rippen enthalten, werden ohne großen Verlust von den Wirbelkörpern abgetrennt. Die Förderleistung der Förderräder 33 liegt bei ca. 1 m/s.

Zu den eingangs beschriebenen Vorteilen kommt hinzu, daß das abgescherte Endprodukt dank einer sauberen Oberfläche besser als ein mit einer Bandsäge hergestelltes aussieht und es eine vergleichsweise geringere Keimzahl aufweist und dadurch eine längere Haltbarkeit hat. Ein Verschmieren durch Sägemehl tritt an der Fleischoberfläche und auch am Trennblatt nicht auf. Auch bilden sich keine Knochensplitter. Die Orientierung der Phase am Trennblatt ist nach oben, und die glatte Seite ist zu den Nutzstücken, den spareribs, hin gerichtet. Im oberen Bereich am Trennblatt geringfügig gebildete Krümel werden abgestreift und verschmieren nicht das Trennblatt. Ablagerungen, die einen Nährboden für Mikroben und somit ein hygienisches Problem sein würden, bilden sich also nicht.

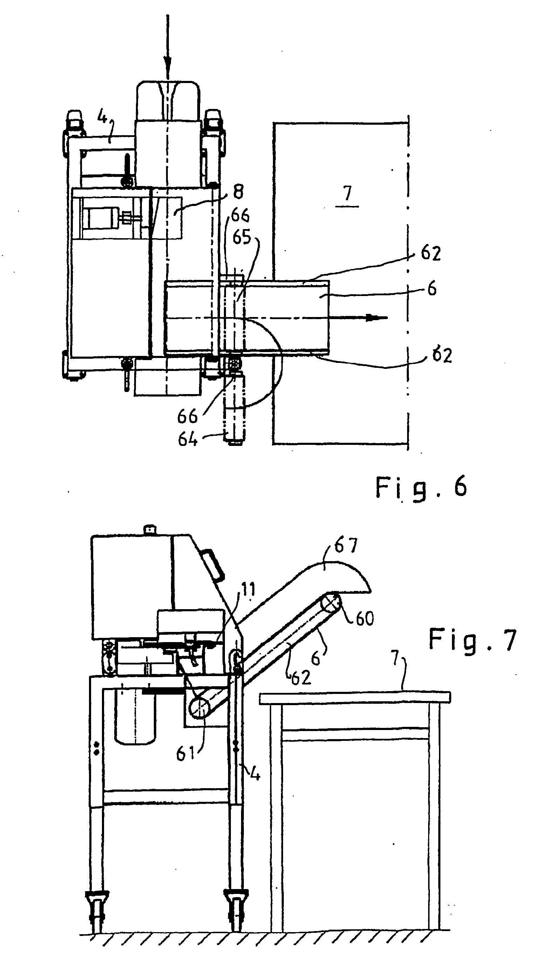

Fig. 6 zeigt eine weitere Ausbaustufe der Vorrichtung, bei der statt einer Rutsche mit dem Auffangbehälter ein Förderband 6 auslaufseitig des Trennmessers 11 unterhalb desselben angeordnet ist. Das Förderband 6 ist um zwei Umlenkrollen 60, 61 geführt, die in einem Rahmen 62 gelagert sind. Ein Motor 64 dient dem Antrieb des Bandes 6 über eine Antriebswalze 65, wie Fig. 6 bei entfernter Abdeckung zeigt.

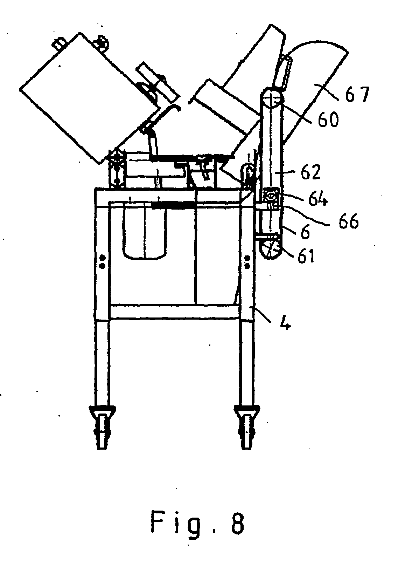

Der Rahmen 62 ist in Haltern 66 verschwenkbar und leicht lösbar am Gestell 4 gehalten. Er läßt sich dadurch gem. Fig. 7 und 8 vertikal stellen zwecks Zugänglichkeit beim Reinigen und geneigt oder waagerecht einstellen, je nach der Höhe des Arbeitstisches 7, auf den die Rippenstücke gefördert werden sollen. Zum Schutz ist eine Abdeckung 67 über dem Förderbereich des Bandes 6 vorgesehen, die ebenfalls hochschwenkbar und abnehmbar am Gestell 4 gelagert ist, wie Fig. 8 zeigt.

Sämtliche Verkleidungen und Fördermittel sind in ihrer Arbeitsstellung mit Verriegelungen und/oder Kontakten versehen, die so geschaltet sind, daß ein Betrieb nur bei völlig sicherer Betriebsbereitschaft möglich ist.

In einer weiteren Ausbaustufe ist, wie Fig. 6 gestrichelt zeigt, eine Trennschere 8 unter dem Zulaufbereich angeordnet, die durch Sensoren gesteuert jeweils dann schließt, wenn sich der kurze Lappen, d.h. das Nebenstück, im Scherbereich befindet.

Vorzugsweise ist das einlaufseitige Förderrad steuerbar kuppelbar angetrieben und jeweils dann durch die Sensoren entkuppelt, wenn die Trennschere 8 betätigt wird.

### Bezugszeichenliste:

- 1: Trennvorrichtung
- 10: Trennkranz
- 11: Trennblatt
- 12: Getriebemotor

- 2, 2A: Führungsbahn
- 21: erste Führungsplatte
- 22: zweite Führungsplatte
- 23: Führungsrinne
- 23A: Einlaufbereich
- 24: Trennkranzaufnahmenut
- 25: Feststeller zu 22
- 26: Querführungen

- 3: Förderantrieb
- 30: Antriebsnocken
- 31 - 33: Förderräder
- 34: Pendellager
- 35: Zwischenräder
- 36: Zahnräder
- 37: Fördermotor
- 38: Vortriebsgehäuse
- 39: Gasfeder

- 4: Gestell
- 40: Sicherheitsabdeckung
- 41: Schutzhaube
- 42: Einhängung zu 41
- 43: Abführtrichter für RS
- 44: Abführtrichter für NS
- 45: Abweiser
- 46, 46A: Rollen

- 50: Schwenklager zu 3

- 6: Förderband
- 60, 61: Umlenkrollen
- 62: Rahmen
- 64: Motor
- 65: Antriebswalze
- 66: Bandrahmenhalter
- 67: Schutzabdeckung

- 7: Arbeitstisch

- 8: Trennschere

- DF: Dornfortsätze
- DF*: Dornfortsätze (rechts).

- F: Förderrichtung

- NS: Nebenstück
- NS*: Nebenstück (rechts)

- RR: Rückgrat

- RS: Rippenstück
- RS*: Rippenstück (rechts)

- SF: Seitenfortsätze

- W: Spaltweite

## Patentansprüche

1. Vorrichtung zum Trennen eines Rippenstückes (R) von einem Rückgrat (RR), wobei das gespaltene Rückgrat in einer Führungsbahn (2) aus zwei Führungsplatten (21, 22) die eine keilförmige Rinne (23) begrenzt, gefördert wird, durch die das Rippenstück (R) jeweils hindurchragt und eine Schneide (10) einer Trennvorrichtung (1) rippenseitig vorbeilaufend kreuzt, **dadurch gekennzeichnet, daß** die Trennvorrichtung (1) ein Kreismesser mit einem keilförmig zugespitzten Trennkranz (10) ist, dessen Trennblatt (11) nahe parallel zu den Führungsplatten (21, 22) angeordnet ist, deren Abstand zueinander einstellbar ist.

2. Vorrichtung nach Anspruch 1, **dadurch gekennzeichnet, daß** das Trennblatt (11) im wesentlichen horizontal angeordnet ist.

3. Vorrichtung nach einem der vorstehenden Ansprüche, **dadurch gekennzeichnet, daß** der Trennkranz (10) bis unter oder in die abseitig der Trennvorrichtung (1) gelegene Führungsplatte (22) reicht.

4. Vorrichtung nach einem der vorstehenden Ansprüche, **dadurch gekennzeichnet, daß** die Führungsrinne (23, 23A) in einer Förderrichtung (F) einen trichterförmigen Anfang und einen etwas weiteren nach oben offenen Einlege- und Einlaufbereich (23A) als anschließenden Förder- und Trennbereich hat.

5. Vorrichtung nach einem der vorstehenden Ansprüche, **dadurch gekennzeichnet, daß** die Führungsrinne (23) nach unten verengt ausgebildet ist und ihre Weite (W) jeweils derart einzustellen ist, daß das Rückgrat (RR) mit seinen Wirbeln und Seitenfortsätzen (SF) in der Führungsrinne (23) plaziert an dem Trennblatt (11) abschließen.

6. Vorrichtung nach einem der vorstehenden Ansprüche, **dadurch gekennzeichnet, daß** über der Führungsbahn (2) ein Förderantrieb (3) so angeordnet ist, daß er die Spaltfläche des Rückgrats (RR) mit einer Andruckkraft beaufschlagt und in der Förderrichtung (F) vor dem Sägebereich in diesem und hinter diesem erfaßt und dieses bis aus dem Ende der Führungsbahn (2) fördert.

7. Vorrichtung nach Anspruch 6, **dadurch gekennzeichnet, daß** der Förderantrieb (3) aus mehreren noppenbesetzten Förderrädern (31 - 33) besteht, die entweder elastische Stege aufweisen oder in Pendellagern (34) oder mit einer elastischen Kupplung beschränkt vertikal beweglich gelagert sind und synchron angetrieben werden.

8. Vorrichtung nach Anspruch 7, **dadurch gekennzeichnet, daß** die Antriebsachsen der Förderräder (31 - 33) über Zahnräder (36) und Zwischenräder (35) antriebsmäßig miteinander verbunden sind.

9. Vorrichtung nach Anspruch 8, **dadurch gekennzeichnet, daß** der Förderantrieb (3) zusammen mit seinem Fördermotor (37) als eine schwenkbare Baueinheit an einem Gestell (4) angeordnet ist, das das Kreismesser (11) trägt.

10. Vorrichtung nach Anspruch 9, **dadurch gekennzeichnet, daß** die schwenkbare Baueinheit des Förderantriebes (3) mit einer Gasdruckfeder (39) am Gestell (4) abgestützt ist und die innere Führungsplatte (21) zumindest deren Abschnitt im Förderbereich trägt.

11. Vorrichtung nach Anspruch 9, **dadurch gekennzeichnet, daß** der Förderantrieb (3) von einem Vortriebsgehäuse (38) umgeben ist, an dem eine Schutzhaube (41) de Sägebereiches und des Förderbereiches hochschwenkbar und lösbar angehängt ist.

12. Vorrichtung nach Anspruch 11, **dadurch gekennzeichnet, daß** die Führungsrinne (23) zwischen dem Einlegebereich (23A) und der Schutzhaube (41) mit einer Sicherheitsabdeckung (40) mit einem passenden Freiraum für das jeweils eingelegte Rückgrat (RR) überdeckt ist.

13. Vorrichtung nach einem der vorstehenden Ansprüche, **dadurch gekennzeichnet, daß** in Förderrichtung (F) anschließend an den Sägebereich beabstandet unter der Führungsrinne (23) ein Abweiser (45) so angeordnet ist, daß ein abgesägtes Rippenstück (RS, RS*) daran in einen ersten Abführtrichter (43) und ein kürzeres Nebenstück (NS, NS*) in einen dahinterliegenden zweiten Abführtrichter (44) fallen.

14. Vorrichtung nach einem der vorstehenden Ansprüche, **dadurch gekennzeichnet, daß** das Gestell (4)) auf fest ausgerichteten Rädern (46) und schwenkbaren feststellbaren Rädern (46A) steht.

15. Vorrichtung nach Anspruch 6, **dadurch gekennzeichnet, daß** der Förderantrieb (3) etwas langsamer fördert als die Umfangsgeschwindigkeit des Kreismessers (11) ist.

16. Vorrichtung nach Anspruch 13, **dadurch gekennzeichnet, daß** der Abweiser (45) durch einen Sensor im Förderbereich vor dem Sägebereich in Höhe der Enden der Nebenstücke (NS) elektromagnetisch gesteuert höhenveränderlich ist.

17. Vorrichtung nach einem der vorstehenden Ansprüche, **dadurch gekennzeichnet, daß** auslaufseitig der Trennscheibe (11) darunter ein motorisch angetriebenes Förderband (6) angeordnet ist, das die abgetrennten Rippenstücke (RS) seitlich aus dem Gestell (4) herausbefördert.

18. Vorrichtung nach Anspruch 12, **dadurch gekennzeichnet, daß** das Förderband (6) in einem Rahmen (66) über Walzen (60, 61) umgelenkt gelagert ist, der an dem Gestell (4) neigungsverstellbar und lösbar gehalten ist, so daß er senkrecht in eine Transport- und Reinigungsstellung und in eine waagerechte oder geneigte Arbeitsstellung einzustellen ist.

19. Vorrichtung nach einem der Ansprüche 17 oder 18, **dadurch gekennzeichnet, daß** das Förderband (6) mit einer Schutzabdeckung (67) verkleidet ist, die am Gestell (4) verschwenkbar und lösbar gehalten ist.

20. Vorrichtung nach einem der vorstehenden Ansprüche, **dadurch gekennzeichnet, daß** in einem Einlaufbereich vor der Trennscheibe (11) unter den Führungsplatten (21, 22) eine motorisch angetriebene Trennschere (8) angeordnet ist, die jeweils durch Sensoren gesteuert dann kurzzeitig schließend angesteuert ist, wenn sich das Nebenstück (NS) und nur dieses vollständig in deren Scherbereich befindet.

21. Vorrichtung nach Anspruch 20, **dadurch gekennzeichnet, daß** das einlaufseitige Förderrad steuerbar kuppelbar angetrieben und jeweils dann durch die Sensoren entkuppelt ist, wenn die Trennschere (8) betätigt wird.

## Claims

1. Apparatus for severing a spare rib (R) from a backbone (RR) wherein the split backbone is conveyed in a guide path (2) comprising two guide plates (21, 22), which delimits a wedge-shaped channel (23), through which the spare rib (R) respectively projects and crosses a cutting edge (10) of a severing device (1) passing same at the rib side, **characterised in that** the severing device (1) is a circular blade with a severing rim (10) which is pointed in a wedge-shaped configuration and the severing blade (11) of which is arranged almost parallel to the guide plates (21, 22), the mutual spacing of which is adjustable.

2. Apparatus according to claim 1 **characterised in that** the severing blade (11) is arranged substantially horizontally.

3. Apparatus according to one of the preceding claims **characterised in that** the severing rim (10) extends to below or into the guide plate (22) which is remote from the severing device (1).

4. Apparatus according to one of the preceding claims **characterised in that** the guide channel (23, 23A) has in a conveyor direction (F) a funnel-shaped beginning and a somewhat wider, upwardly open insertion and entry region (23A) as an adjoining conveyor and severing region.

5. Apparatus according to one of the preceding claims **characterised in that** the guide channel (23) is of a downwardly narrowed configuration and its width (W) is to be respectively set in such a way that the backbone (RR) with its vertebrae and side extensions (SF), placed in the guide channel (23), terminate at the severing blade (11).

6. Apparatus according to one of the preceding claims **characterised in that** a conveyor drive (3) is arranged above the guide path (2) in such a way that it acts on the split surface of the backbone (RR) with a pressing force and engages it in the conveyor direction (F) upstream of the sawing region in same and downstream of same and conveys it to a position out of the end of the guide path (2).

7. Apparatus according to claim 6 **characterised in that** the conveyor drive (3) comprises a plurality of knobbed conveyor wheels (31-33) which either have elastic legs or are mounted limitedly vertically movably in self-aligning bearings (34) or with an elastic coupling and are driven synchronously.

8. Apparatus according to claim 7 **characterised in that** the drive shafts of the conveyor wheels (31-33) are drivingly connected together by way of gears (36) and intermediate wheels (35).

9. Apparatus according to claim 8 **characterised in that** the conveyor drive (3) together with its conveyor motor (37) is arranged as a pivotable structural unit on a frame structure (4) which carries the circular blade (11).

10. Apparatus according to claim 9 **characterised in that** the pivotable structural unit of the conveyor drive (3) is supported with a gas compression spring (39) on the frame structure (4) and the inner guide plate (21) carries at least the portion thereof in the conveyor region.

11. Apparatus according to claim 9 **characterised in that** the conveyor drive (3) is surrounded by a propulsion housing (38) on which a guard hood (41) of the sawing region and the conveyor region is upwardly pivotably and releasably mounted.

12. Apparatus according to claim 11 **characterised in that** the guide channel (23) is covered between the insertion region (23A) and the guard hood (41) with a safety cover (40) with a suitable free space for the respectively inserted backbone (RR).

13. Apparatus according to one of the preceding claims **characterised in that** a deflector (45) is arranged adjoining the sawing region in the conveyor direction (F) at a spacing below the guide channel (23) in such a way that a sawn-off spare rib (RS, RS*) falls thereat into a first discharge hopper (43) and a shorter side portion (NS, NS*) falls thereat into a second discharge hopper (44) disposed therebehind.

14. Apparatus according to one of the preceding claims **characterised in that** the frame structure (4) stands on fixedly oriented wheels (46) and pivotable lockable wheels (46A).

15. Apparatus according to claim 6 **characterised in that** the conveyor drive (3) conveys somewhat slower than the peripheral speed of the circular blade (11).

16. Apparatus according to claim 13 **characterised in that** the deflector (45) is adjustable in respect of height under electromagnet control by a sensor in the conveyor region upstream of the sawing region at the level of the ends of the side portions (NS).

17. Apparatus according to one of the preceding claims **characterised in that** arranged at the exit side of the severing disc (11) and therebeneath is a motor-driven conveyor belt (6) which conveys the severed spare ribs (RS) laterally out of the frame structure (4).

18. Apparatus according to claim 12 **characterised in that** the conveyor belt (6) is supported deflected over rollers (60, 61) in a frame (66) which is held on the frame structure (4) releasably and adjustably in inclination so that it can be set vertically into a transport and cleaning position and into a horizontal or inclined working position.

19. Apparatus according to one of claims 17 and 18 **characterised in that** the conveyor belt (6) is enclosed by a protective cover (67) which is mounted pivotably and releasably on the frame structure (4).

20. Apparatus according to one of the preceding claims **characterised in that** arranged in an entry region upstream of the severing disc (11) below the guide plates (21, 22) are motor-driven severing shears (8) which are respectively actuated controlled by sensors to briefly close when the side portion (NS) and only said side portion is disposed completely in the shearing region thereof.

21. Apparatus according to claim 20 **characterised in that** the conveyor wheel at the entry end is controllably coupleably driven and is respectively uncoupled by the sensors when the severing shears (8) are actuated.

## Revendications

1. Dispositif pour séparer une côte (R) d'une échine (RR), l'échine fendue étant conduite dans une voie de guidage (2) formée de deux plaques de guidage (21, 22) limitant un canal cunéiforme (23), par lequel la côte (R) fait saillie, et croise, en passant, un tranchant (10) d'un dispositif de sectionnement (1), côté côtes, **caractérisé en ce que** le dispositif de sectionnement (1) est un couteau circulaire avec une couronne de sectionnement cunéiforme, effilée (10), dont la lame de sectionnement (11) est disposée presque parallèlement aux plaques de guidage (21, 22) dont l'intervalle peut être réglé.

2. Dispositif selon la revendication 1, **caractérisé en ce que** la lame de sectionnement (11) est sensiblement disposée horizontalement.

3. Dispositif selon l'une des revendications précédentes, **caractérisé en ce que** la couronne de sectionnement (10) s'étend jusque sous ou dans la plaque de guidage (22) située à l'écart du dispositif de sectionnement (1).

4. Dispositif selon l'une des revendications précédentes, **caractérisé en ce que** le canal de guidage (23, 23A) présente, dans une direction de transport (F) une entrée en forme d'entonnoir et une zone de placement et d'amenée (23A) un peu plus large, ouverte vers le haut, en tant que domaine de transport et de sectionnement y faisant suite.

5. Dispositif selon l'une des revendications précédentes, **caractérisé en ce que** le canal de guidage (23) est étranglé vers le bas, et que sa largeur (W) peut être ajustée chaque fois de telle manière que l'échine (RR) avec ses vertèbres et ses prolongement latéraux (SF), en place dans le canal de guidage (23), parvient jusqu'à la lame de sectionnement (11).

6. Dispositif selon l'une des revendications précédentes, **caractérisé en ce que**, au-dessus de la voie de guidage (2), une commande de transport (3) est disposée de telle manière qu'elle exerce une force de pression sur la surface fendue de l'échine (RR) et s'engage dans celle-ci et derrière celle-ci, dans la direction de transport (F), en amont de la zone de sciage, et la transporte jusqu'à la fin de la voie de guidage (2).

7. Dispositif selon la revendication 6, **caractérisé en ce que** la commande de transport (3) est composée de plusieurs roues de transport (31 - 33) pourvues de protubérances qui présentent des pattes élastiques ou sont montées, mobiles verticalement, de manière limitée, avec un accouplement élastique, et entraînées de manière synchrone.

8. Dispositif selon la revendication 7, **caractérisé en ce que** les axes de la commande des roues de transport (31 - 33) sont reliées ensemble à entraînement, par l'intermédiaire de roues dentées (36) et de roues intermédiaires (35).

9. Dispositif selon la revendication 8, **caractérisé en ce que** la commande de transport (3) est agencée en commun avec son moteur de transport (37) en tant qu'unité modulaire pivotante, sur un bâti (4) qui porte le couteau circulaire (11).

10. Dispositif selon la revendication 9, **caractérisé en ce que** l'unité modulaire pivotante de la commande de transport (3) est soutenue sur le bâti (4) avec un ressort de pression à gaz (39) et porte la plaque de guidage intérieure (21), au moins la section de celle-ci dans la zone de transport.

11. Dispositif selon la revendication 9 **caractérisé en ce que** la commande de transport (3) est entourée d'une boîte d'avancement (38) à laquelle un capot de protection (41) de la zone de sciage et de la zone de transport, basculant vers le haut et amovible, est accroché.

12. Dispositif selon la revendication 11, **caractérisé en ce que** le canal de guidage (23), entre la zone de placement (23A) et le capot de protection (41), est recouvert d'une couverture de sécurité (40), avec un espace libre adéquat pour chaque échine (RR) en place.

13. Dispositif selon l'une des revendications précédentes, **caractérisé en ce que**, dans le dispositif de transport (F), à la suite de la zone de sciage, à distance, au-dessous du canal de guidage (23), est disposé un déflecteur (45) de telle manière qu'une côte sciée (RS, RS*) tombe dans un premier entonnoir d'évacuation (43) et un morceau secondaire, plus court (NS, NS*) dans un deuxième entonnoir d'évacuation (44) situé en aval.

14. Dispositif selon l'une des revendications précédentes, **caractérisé en ce que** le bâti (4) se tient sur des roues orientées fixement (46) et des roues pivotantes, ajustables (46A).

15. Dispositif selon la revendication 6, **caractérisé en ce que** la commande de transport (3) transporte à une vitesse plus lente que la vitesse périphérique du couteau circulaire (11).

16. Dispositif selon la revendication 13, **caractérisé en ce que** le déflecteur (45) peut être ajusté verticalement, par commande électromagnétique, au moyen d'un capteur, dans le domaine de transport, en amont de la zone de sciage, à la hauteur des extrémités des morceaux secondaires (NS).

17. Dispositif selon l'une des revendications précédentes, **caractérisé en ce que**, côté sortie de la plaque de sectionnement (11), au-dessous de celle-ci, est disposé une bande transporteuse (6), entraînée par moteur, au moyen de laquelle la côte séparée (RS) est évacuée, latéralement, du bâti (4).

18. Dispositif selon la revendication 12, **caractérisé en ce que** la bande transporteuse (6) est montée, à renvoi, par l'intermédiaire de rouleaux (60, 61), à un cadre (66) qui, ajustable obliquement, est maintenu, de manière amovible, au bâti (4), de sortie qu'il peut être ajusté, verticalement, dans une position de transport et de nettoyage, et dans une position de travail horizontale ou inclinée.

19. Dispositif selon l'une des revendications 17 ou 18, **caractérisé en ce que** la bande transporteuse (6) est revêtue d'une couverture de protection (67) qui est maintenue, pivotante et amovible, au bâti (4).

20. Dispositif selon l'une des revendications précédentes, **caractérisé en ce que**, dans une zone d'entrée, en amont de la plaque de sectionnement (11), sous les plaques de guidage (21, 22), est disposée une cisaille de sectionnement (8) entraînée par moteur, qui est commandée, chaque fois, par capteurs, puis excitée brièvement en fermeture lorsque le morceau secondaire (NS), et seulement celui-ci, se trouve complètement dans la zone de cisaillement.

21. Dispositif selon la revendication 20, **caractérisé en ce que** la roue de transport côté entrée est entraînée en couplage contrôlé et est chaque fois désaccouplée par les capteurs, quand la cisaille de sectionnement (8) est actionnée.
